# EUROPÄISCHE PATENTSCHRIFT

(11) **EP 1 334 159 B1**
(45) Veröffentlichungstag und Bekanntmachung des Hinweises auf die Patenterteilung: **26.08.2015**
(21) Anmeldenummer: 01978464.4
(22) Anmeldetag: 30.10.2001
(51) Int. Cl.: C09D 11/02, C09D 11/101, C09D 201/00, C08G 83/00, C08G 18/32, C08G 18/34, C09D 11/102, C08G 18/38, C08G 18/66

(54) **VERWENDUNG VON HYPERVERZWEIGTEN POLYURETHANEN ZUR HERSTELLUNG VON DRUCKFARBEN**
USE OF HYPERBRANCHED POLYURETHANES FOR PRODUCING PRINTING INKS
UTILISATION DE POLYURETHANES HYPERRAMIFIES POUR LA PRODUCTION D'ENCRES D'IMPRIMERIE

(30) Priorität: 31.10.2000 DE 10054054; 30.05.2001 DE 10126200
(43) Veröffentlichungstag der Anmeldung: 13.08.2003
(73) Patentinhaber: BASF SE, 67056 Ludwigshafen (DE)
(72) Erfinder: BRUCHMANN, Bernd, 67251 Freinsheim (DE); BEDAT, Joelle, 67000 Strasbourg (FR); KACZUN, Jürgen, 67157 Wachenheim (DE); POGANIUCH, Peter, 67434 Neustadt (DE)
(86) Internationale Anmeldenummer: PCT/EP2001/012521
(87) Internationale Veröffentlichungsnummer: WO 2002/036695

(56) Entgegenhaltungen:
- EP-A- 0 835 890
- EP-A- 0 870 789
- EP-A- 0 899 287
- DE-A- 10 004 495
- DE-A- 10 023 229
- US-A- 5 319 052
- DATABASE WPI Section Ch, Week 199438 Derwent Publications Ltd., London, GB; Class A23, AN 1994-308991 XP002187749 PERSTORP AB: "New blocked isocyanate-terminated dendritic macromolecules - useful for tailor-made coatings, polyurethane foams and elastomers with improved elasticity, impact and outdoor resistance and hydrolytic stability" & RESEARCH DISCLOSURE, Bd. 365, Nr. 035, 10. September 1994 (1994-09-10), Emsworth, GB

## Beschreibung

Die vorliegende Erfindung betrifft die Verwendung von hyperverzweigten Polyurethanen zur Herstellung von Druckfarben und von Drucklacken. Die Erfindung betrifft weiterhin Druckfarben und Drucklacke, die hyperverzweigte Polyurethane als Bindemittel enthalten.

Bei so genannten mechanischen Druckverfahren wie Offsetdruck, Hochdruck, Flexodruck, Tiefdruck oder Siebdruck wird die Druckfarbe durch Kontakt einer mit Druckfarbe versehenen Druckplatte oder Druckform mit dem Bedruckstoff auf den Bedruckstoff übertragen. Druckfarben für diese Druckprozesse umfassen üblicherweise Lösemittel, Farbmittel, Bindemittel sowie ggf. verschiedene Additive. Bindemittel dienen zur Bildung des Farbfilms und der Verankerung der Bestandteile wie beispielsweise Pigmente oder Füllstoffe im Farbfilm. Je nach Konsistenz enthalten derartige Druckfarben üblicherweise zwischen 10 und 50 Gew. % Bindemittel. Druckfarben für mechanische Druckverfahren umfassen pastöse Druckfarben mit hoher Viskosität für den Offset- und Hochdruck sowie Flüssigdruckfarben mit vergleichsweise niedriger Viskosität für den Flexo- und Tiefdruck. Weitere Einzelheiten sind beispielsweise offenbart in "Printing Inks" - Ullmann's Encyclopedia of Industrial Chemistry, Sixth Edition, 1999 Electronic Release.

Drucklacke werden entweder als Grundierung auf den Bedruckstoff aufgetragen (so genannte "primer") oder nach dem Druckvorgang als Überzug auf den bedruckten Bedruckstoff aufgetragen. Drucklacke werden beispielsweise zum Schutz des Druckbildes, zur Verbesserung der Haftung der Druckfarbe auf dem Bedruckstoff oder zu ästhetischen Zwecken eingesetzt. Die Auftragung erfolgt üblicherweise in-line mittels eines Lackierwerkes an der Druckmaschine. Drucklacke enthalten kein Farbmittel, sind aber abgesehen davon im Regelfalle ähnlich wie Druckfarben zusammengesetzt.

Polyurethane oder Polyurethanderivate sind als übliche Bestandteile von Druckfarben bekannt. Beispielhaft sei an dieser Stelle auf US 5,556,925, EP-A 451 657 oder US 5,886,091 verwiesen. Polyurethane werden häufig als Bindemittel in wäßrigen oder lösemittelhaltigen Flüssigdruckfarben für den industriellen Verpackungsdruck zur Herstellung von Verpackungsmitteln wie Kartonagen, Tragetaschen, Schwersäcken, Gefriergutverpackungen oder Geschenkpapieren eingesetzt. Geeignet modifizierte Polyurethane werden aber auch in pastösen Druckfarben eingesetzt. So offenbart beispielsweise EP-A 451 657 mit trocknenden Ölen modifizierte Polyurethane als Bindemittel für oxidativ härtende Offsetdruckfarben.

Um das geeignete Polyurethan für den jeweils gewünschten Anwendungszweck zu erhalten, ist die Verwendung unterschiedlichster monomerer oder oligomerer Komponenten zur Herstellung der Bindemittel vorgeschlagen worden. Beispielhaft sei hier auf US 5,556,925, JP-A 55 120 680, JP-A 03 296 577 oder JP-A 11 166 148 verwiesen. Eine solche Vorgehensweise ist aber umständlich und durch die Notwendigkeit, viele Komponenten in kleinen Mengen bereithalten und viele Synthesen in geringen Chargengrößen fahren zu müssen unwirtschaftlich. Es wäre äußerst wünschenswert, Polyurethane für die verschiedensten Anwendungszwecke im Druckfarbenbereich nach einem einfachen und möglichst standardisierten Syntheseschema aus einfachen Komponenten herstellen zu können.

US5319052 offenbart ein zweistufiges Verfahren zur Synthese von Bindemitteln für Druckfarben. In Schritt A werden zunächst (beliebig verzweigte) OH-terminierte Polyester synthetisiert. In Verfahrensschritt B werden die erhaltenen Polyester mittels PU-Einheiten miteinander verknüpft. Die Verknüpfung mittels PU-Einheiten in Schritt B erfolgt durch Umsetzung der Polyester mit beliebigen Polyhydroxycarbonsäuren und beliebigen Polyisocyanaten. Je nach Art und Menge der Komponenten, Anzahl der OH- und Isocyanat-Gruppen sowie der Reaktionsbedingungen können lineare, beliebig verzweigte oder gar vernetzte PU-Einheiten entstehen. US5319052 enthalt keinerlei Angaben, ob und wie hyperverzweigte Polyurethane erhalten werden könnten.

Weiterhin besteht bei Druckfarben nach wie vor Verbesserungsbedarf bei wichtigen anwendungstechnischen Eigenschaften, wie beispielsweise der Haftung auf dem Bedruckstoff.

Beim Drucken auf nicht saugenden Bedruckstoffen wie beispielsweise Polymer- oder Metallfolien kann die Druckfarbe naturgemäß nicht in den Bedruckstoff eindringen, sondern nach dem Abdampfen des Lösungsmittels verbleibt ein getrockneter Film auf dem Bedruckstoff. Druckfarben für derartige Bedruckstoffe müssen daher sehr gute filmbildende Eigenschaften sowie eine ganz besonders gute Abrieb- und Haftfestigkeit aufweisen, damit sich der Druckfilm bei mechanischer Beanspruchung nicht wieder vom Untergrund ablöst. Druckfarben mit konventionellen Bindemitteln weisen auf vielen Bedruckstoffen keine ausreichende Haftfestigkeit auf, so dass Haftvermittler wie bestimmte Silane oder Titanate zugegeben werden müssen. Beispielhaft sei hier auf US 5,646,200 verwiesen. Aus ökonomischen Gründen sowie zur Vereinfachung der Rezeptur wäre es wünschenswert, auf diesen Zusatz verzichten zu können. Außerdem ist es generell wünschenswert, den Anteil niedermolekularer und damit prinzipiell migrationsfähiger Komponenten der Druckfarbe möglichst klein zu halten. Weiterhin ist aber selbst bei Zusatz von Haftvermittlern die Haftung nicht auf allen Bedruckstoffen befriedigend, so dass hier Verbesserungsbedarf besteht.

Dendrimere, Arborole, Starburst Polymers, hochverzweigte und hyperverzweigte Polymere sind Bezeichnungen für polymere Strukturen, die sich durch eine verzweigte Struktur und eine hohe Funktionalität auszeichnen. Bei Dendrimeren handelt es sich um molekular einheitliche Makromoleküle mit einem hoch symmetrischen Aufbau. Sie werden in vielstufigen Synthesen aufgebaut und sind dementsprechend sehr teuer.

Im Gegensatz dazu sind hoch- bzw. hyperverzweigte Polymere sowohl molekular und strukturell wie strukturell uneinheitlich. Sie weisen Äste unterschiedlicher Länge und Verzweigung auf. Zur Synthese hyperverzweigter Polymere eigenen sich insbesondere so genannte ABₓ-Monomere. Diese weisen zwei verschiedene funktionelle Gruppen A und B auf, die unter Bildung einer Verknüpfung miteinander reagieren können. Die funktionelle Gruppe A ist dabei nur einmal pro Molekül enthalten und die funktionelle Gruppe B zweifach oder mehrfach. Durch die Reaktion der besagten ABₓ-Monomere miteinander entstehen unvernetzte Polymere mit regelmäßig angeordneten Verzweigungstellen. Die Polymere weisen an den Kettenenden fast ausschließlich B-Gruppen auf. Nähere Einzelheiten sind beispielsweise in J.M.S. - Rev. Macromol. Chem. Phys., C37(3), 555 - 579 (1997) zu finden.

Dendrimere und hyperverzweigte Polyurethane sind prinzipiell bekannt. Beispiele dafür sind in WO 97/02304, DE-A 199 04 444 oder US 5,936,055 offenbart. Die Verwendung derartiger Polymere zur Herstellung von Druckfarben mit einem neuartigen Eigenschaftsprofil war jedoch bislang noch nicht bekannt.

Aufgabe der Erfindung war es, Polyurethan-haltige Druckfarben und Drucklacke mit einem neuartigen Eigenschaftsprofil bereitzustellen, bei denen die verwendeten Polyurethane nach einem einfachen Syntheseprinzip herzustellen sind und die auf einfache Art und Weise an die verschiedenen Anwendungszwecke angepasst werden können. Aufgabe der Erfindung war es insbesondere, Polyurethan-haltige Druckfarben mit verbesserter Haftung bereitzustellen. Überraschenderweise wurde gefunden, dass dieses Ziel durch die Verwendung von hyperverzweigten Polyurethanen erreicht werden kann.

Dementsprechend wurde die Verwendung von hyperverzweigten Polyurethanen zur Herstellung von Druckfarben und Drucklacken gefunden, sowie Druckfarben bzw. Drucklacke, die hyperverzweigte Polyurethane als Bindemittel enthalten.

Zu der Erfindung ist im Einzelnen das Folgende auszuführen:
Der Begriff "Polyurethane" im Sinne dieser Erfindung umfasst nicht nur solche Polymere, die ausschließlich durch UrethanGruppen verknüpft sind, sondern in einem allgemeineren Sinne Polymere, die durch Umsetzung von Di- oder Polyisocyanaten mit Verbindungen mit aktivem Wasserstoff erhalten werden können, und
die durch Urethan-, aber auch beispielsweise durch Harnstoff-, Allophanat-, Biuret-, Carbodiimid-, Amid-, Uretonimin-, Uretdion-, Isocyanurat- oder Oxazolidon-Strukturen oder Kombinationen davon verknüpft sein können (siehe beispielsweise "Kunststoff-Taschenbuch"/Saechtling, 26. Auflage, Seite 491 ff., Carl-Hanser-Verlag, München 1995). Unter den Begriff "Polyurethane" im Sinne dieser Erfindung fallen insbesondere weiterhin Polyharnstoff-polyurethane und Polyharnstoffe.

Die vorliegende Erfindung wird bevorzugt mit hyperverzweigten Strukturen im eigentlichen Sinne, d.h. mit molekular und strukturell uneinheitlichen Polymeren ausgeführt. Es können aber selbstverständlich auch strukturell und molekular einheitliche dendrimere Polyurethane eingesetzt werden. Der Begriff "hyperverzweigte Polyurethane" im Sinne dieser Erfindung umfasst daher auch dendrimere Polyurethane.

Die Synthese der zur Ausführung der vorliegenden Erfindung eingesetzten hyperverzweigten Polyurethane kann beispielsweise wie im Folgenden geschildert erfolgen, ohne dass die Erfindung damit auf den Einsatz der nach dieser Herstellmethode synthetisierten Polyurethane beschränkt wäre.

Zur Synthese der hyperverzweigten Polyurethane werden bevorzugt ABₓ-Monomere eingesetzt, die sowohl Isocyanat-Gruppen sowie Gruppen, die mit Isocyanat-Gruppen unter Bildung einer Verknüpfung reagieren können, aufweisen. Bei x handelt es sich um eine natürliche Zahl zwischen 2 und 8. Bevorzugt beträgt x 2 oder 3. Entweder handelt es sich bei A um die Isocyanat-Gruppen und bei B um mit diesen reaktive Gruppen oder es kann der umgekehrte Fall vorliegen.

Bei den mit den Isocyanat-Gruppen reaktiven Gruppen handelt es sich bevorzugt um OH-, NH₂- ,NH-, SH- oder COOH-Gruppen.

Die ABₓ-Monomere sind in bekannter Art und Weise mittels verschiedener Techniken herstellbar.

ABₓ-Monomere können beispielsweise nach der von WO 97/02304 offenbarten Methode unter Anwendung von Schutzgruppentechniken synthetisiert werden. Beispielhaft sei diese Technik an der Herstellung eines AB₂-Monomers aus 2,4-Toluylendiisocyanat (TDI) und Trimethylolpropan erläutert. Zunächst wird eine der Isocyanat-Gruppen des TDI in bekannter Art und Weise verkappt, beispielsweise durch Umsetzung mit einem Oxim. Die verbleibende freie NCO-Gruppe wird mit Trimethylolpropan umgesetzt, wobei nur eine der drei OH-Gruppen mit der Isocyanat-Gruppe reagiert, und die beiden anderen Gruppen durch Acetelisierung geschützt sind. Nach Abspalten der Schutzgruppe wird ein Molekül mit einer Isocyanat-Gruppe und 2 OH-Gruppen erhalten.

Besonders vorteilhaft können die ABₓ-Moleküle nach der von DE-A 199 04 444 offenbarten Methode synthetisiert werden, bei der keine Schutzgruppen erforderlich sind. Bei dieser Methode werden Di- oder Polyisocyanate eingesetzt und mit Verbindungen, die mindestens zwei mit Isocyanatgruppen reaktive Gruppen aufweisen, umgesetzt. Zumindest einer der Reaktionspartner weist Gruppen mit gegenüber dem anderen Reaktionspartner unterschiedlicher Reaktivität auf. Bevorzugt weisen beide Reaktionspartner Gruppen mit gegenüber dem anderen Reaktionspartner unterschiedlicher Reaktivität auf. Die Reaktionsbedingungen werden so gewählt, dass nur bestimmte reaktive Gruppen miteinander reagieren können.

Bevorzugte Di- und/oder Polyisocyanate sind insbesondere leicht und billig verfügbare Isocyanate, beispielsweise aromatische Isocyanate wie 2,4-Toluylendiisocyanat (2,4-TDI), 2,4'-Diphenylmethandiisocyanat (2,4'-MDI), Triisocyanatotoluol, oder aliphatische Isocyanate, wie Hexamethylendiisocyanat (HDI), Isophorondiisocyanat (TDI), 2-Butyl-2-ethylpentamethylendiisocyanat, 2-Isocyanatopropylcyclohexylisocyanat, 2,4,4- oder 2,2,4-Trimethylhexamethylendiisocyanat, 2,4'-Methylenbis(cyclohexyl)diisocyanat und 4-Methyl-cyclohexan-1,3-diisocyanat (H-TDI). Natürlich können auch Mischungen der genannten Isocyanate verwendet werden.

Als Verbindungen mit mindestens zwei mit Isocyanaten reaktiven Gruppen werden vorzugsweise di-, tri- oder tetrafunktionelle Verbindungen eingesetzt, deren funktionelle Gruppen gegenüber NCO-Gruppen eine unterschiedliche Reaktivität aufweisen. Bevorzugt sind Verbindungen mit mindestens einer primären und mindestens einer sekundären Hydroxylgruppe, mindestens einer Hydroxylgruppe und mindestens einer Mercaptogruppe, besonders bevorzugt mit mindestens einer Hydroxylgruppe und mindestens einer Aminogruppe im Molekül, insbesondere Aminoalkohole, Aminodiole und Aminotriole, da die Reaktivität der Aminogruppe gegenüber der Hydroxylgruppe bei der Umsetzung mit Isocyanat deutlich höher ist.

Beispiele für die genannten Verbindungen mit mindestens zwei mit Isocyanaten reaktiven Gruppen sind Propylenglykol, Glycerin, Mercaptoethanol, Ethanolamin, N-Methylethanol-amin, Diethanolamin, Ethanolpropanolamin, Dipropanolamin, Diisopropanolamin, 2-Amino-1,3-propandiol, 2-Amino-2-methyl-1,3-propandiol oder Tris(hydroxymethyl)-aminomethan. Weiterhin sind auch Mischungen der genannten Verbindungen einsetzbar.

Die Herstellung eines AB₂-Moleküls sei beispielhaft für den Fall eines Diisocyanates mit einem Aminodiol erläutert. Hierbei wird zunächst ein Mol eines Diisocyanats mit einem Mol eines Aminodiols bei niedrigen Temperaturen, vorzugsweise im Bereich zwischen -10 bis 30 °C, umgesetzt. In diesem Temperaturbereich erfolgt eine praktisch vollständige Unterdrückung der Urethanbildungsreaktion und die NCO-Gruppen des Isocyanates reagieren ausschließlich mit der Aminogruppe des Aminodiols. Das gebildete ABₓ-Molekül weist eine freie NCO-Gruppe sowie zwei freie OH-Gruppen auf und kann zur Synthese eines hyperverzweigten Polyurethans eingesetzt werden.

Durch Erwärmung und/oder Katalysatorzugabe kann dieses AB₂-Molekül intermolekular zu einem hyperverzweigten Polyurethan reagieren. Die Synthese des hyperverzweigten Polyurethans kann vorteilhaft ohne vorherige Isolierung des ABₓ-Moleküls in einem weiteren Reaktionsschritt bei erhöhter Temperatur erfolgen, vorzugsweise im Bereich zwischen 30 und 80 °C. Bei Verwendung des geschilderten AB₂-Moleküls mit zwei OH-Gruppen und einer NCO-Gruppe entsteht ein hyperverzweigtes Polymer, welches pro Molekül eine freie NCO-Gruppe sowie - je nach Polymerisationsgrad - eine mehr oder weniger große Zahl von OH-Gruppen aufweist. Die Reaktion kann bis zu hohen Umsätzen durchgeführt werden, wodurch sehr hochmolekulare Strukturen erhalten werden. Sie kann aber auch beispielsweise durch Zugabe geeigneter monofunktioneller Verbindungen oder durch Zugabe einer der Ausgangsverbindungen zur Herstellung des AB₂-Moleküls beim Erreichen des gewünschten Molekulargewichtes abgebrochen werden. Je nach der zum Abbruch verwendeten Ausgangsverbindung entstehen entweder vollständig NCO-terminierte oder vollständig OH-terminierte Moleküle.

Alternativ kann beispielsweise auch ein AB₂-Molekül aus einem Mol Glycerin und 2 mol TDI hergestellt werden. Bei tiefer Temperatur reagieren vorzugsweise die primären Alkoholgruppen sowie die Isocyanat-Gruppe in 4-Stellung und es wird ein Addukt gebildet, welches eine OH-Gruppe und zwei Isocyanat-Gruppen aufweist, und das wie geschildert bei höheren Temperaturen zu einem hyperverzweigten Polyurethan umgesetzt werden kann. Es entsteht zunächst ein hyperverzweigtes Polymer, welches eine freie OH-Gruppe sowie - je nach Polymerisationsgrad - eine mehr oder weniger große Zahl von NCO-Gruppen aufweist.

Die Herstellung der hyperverzweigten Polyurethane kann prinzipiell ohne Lösungsmittel, bevorzugt aber in Lösung erfolgen. Als Lösungsmittel prinzipiell geeignet sind alle bei der Umsetzungstemperatur flüssigen und gegenüber den Monomeren und Polymeren inerten Verbindungen.

Andere Produkte sind durch weitere Synthesevarianten zugänglich. Beispielhaft seien an dieser Stelle genannt:
AB₃-Moleküle lassen sich beispielsweise durch Reaktion von Diisocyanaten mit Verbindungen mit mindestens 4 gegenüber Isocyanaten reaktiven Gruppen erhalten. Beispielhaft sei die Umsetzung von Toluylendiisocyanat mit Tris(hydroxymethyl)-aminomethan genannt.
Zum Abbruch der Polymerisation können auch polyfunktionelle Verbindungen eingesetzt werden, die mit den jeweiligen A-Gruppen reagieren können. Auf diese Art und Weise können mehrere kleine hyperverzweigte Moleküle zu einem großen hyperverzweigten Molekül verknüpft werden.

Hyperverzweigte Polyurethane mit kettenverlängerten Ästen lassen sich beispielsweise erhalten, indem zur Polymerisationsreaktion neben den ABₓ-Molekülen zusätzlich im molaren Verhältnis 1:1 ein Diisocyanat und eine Verbindung, die zwei mit Isocyanatgruppen reaktive Gruppen aufweist, eingesetzt werden. Diese zusätzlichen AA- bzw. BB-Verbindungen können auch noch über weitere funktionelle Gruppen verfügen, die bei den Reaktionsbedingungen aber nicht reaktiv gegenüber den A- oder B-Gruppen sein dürfen. Auf diese Art und Weise können weitere Funktionalitäten in das hyperverzweigte Polymer eingebracht werden.

Weitere Synthesevarianten für hyperverzweigte Polyurethane finden sich in unseren bislang unveröffentlichten Anmeldungen mit den Aktenzeichen DE 100 13 187.5 und DE 100 30 869.4..

Die erhaltenen hyperverzweigten und hochfunktionellen Polyurethane können bereits als solche zur Herstellung von Druckfarben oder von Drucklacken eingesetzt werden, vorausgesetzt, die im Zuge der jeweiligen Ausführungsform der Synthese erhaltenen funktionellen Gruppen sind für die gewünschte Anwendung geeignet.

Besonders vorteilhaft können die funktionellen Gruppen hydrophobiert, hydrophiliert oder umfunktionalisiert werden. Auf diese Art und Weise werden der jeweiligen Anwendung der Druckfarbe besonders angepasste Polymere zugänglich. Zur Umfunktionalisierung eignen sich aufgrund ihrer Reaktivität ganz besonders solche hyperverzweigten Polyurethane, die Isocyanat-Gruppen aufweisen. Selbstverständlich können auch OH- oder NH₂-terminierte Polyurethane mittels geeigneter Reaktionspartner umfunktionalisiert werden.

Beispiele für Gruppen, die mittels geeigneter Reaktionspartner eingeführt werden, umfassen -COOH, -COOR, -CONHR, -CONH₂, -OH, -SH, -NH₂, -NHR, -NR₂, -SO₃H, -SO₃R, -NHCOOR, -NHCONH₂, -NHCONHR oder -CN, ohne dass die Aufzählung darauf beschränkt sein soll. Bei den Resten R der besagten Gruppen handelt es sich im Regelfalle um geradkettige oder verzweigte Alkylreste oder um Arylreste, die auch noch weiter substituiert sein können, beispielsweise um C₁ - C₈-Alkylreste oder um C₅ - C₁₂-Arylreste.

Gruppen, die über ausreichend acide H-Atome verfügen, können durch Behandlung mit geeigneten Basen in die entsprechenden Salze übergeführt werden. Analog lassen sich basische Gruppen mit geeigneten Säuren in die entsprechenden Salze überführen. Dadurch lassen sich wasserlösliche hyperverzweigte Polyurethane erhalten.

Durch Umsetzung NCO-terminierter Produkte mit Alkanolen und Alkylaminen, insbesondere Alkanolen und Alkylaminen mit C₈-C₄₀-Alkylresten, lassen sich hydrophobierte Produkte erhalten.

Hydrophilierte, aber nicht ionische Produkte lassen sich durch Reaktion NCO-terminierter Polymere mit Polyetheralkoholen, wie beispielsweise Di-, Tri- oder Tetra- oder Polyethylenglykol erhalten, besonders bevorzugt ist hier jedoch die Reaktion mit bezüglich OH-Gruppen monofunktionellen Polyethylenoxid-alkoholen.

Säuregruppen lassen sich beispielsweise durch Umsetzung mit Hydroxycarbonsäuren, Mercaptocarbonsäuren, Hydroxysulfonsäuren oder Aminosäuren einführen. Als Beispiele geeigneter Reaktionspartner seien Hydroxyessigsäure, Hydroxypivalinsäure, 4-Hydroxybenzoesäure, 12-Hydroxydodecansäure, 2-Hydroxyethansulfonsäure, Mercaptoessigsäure, Glycin, ß-Alanin oder Taurin genannt.

Durch Umsetzung mit Acrylatgruppen enthaltenden Verbindungen, wie beispielsweise Acrylatgruppen enthaltenden Alkoholen wie 2-Hydroxyethylacrylat oder 2-Hydroxyethylmethacrylat, lassen sich hyperverzweigte Polyurethane erhalten, die polymerisierbare olefinische Gruppen aufweisen, und die zur Herstellung von strahlungsvernetzenden, insbesondere von UV-vernetzenden Druckfarben eingesetzt werden können. Durch Umsetzung mit entsprechend substituierten Alkoholen lassen sich auch Epoxid- oder Vinylethergruppen einbringen, und die für kationisch vernetzende Druckfarben genutzt werden können.

Oxidativ trocknende hyperverzweigte Polyurethane, die sich insbesondere für Offset- oder Hochdruckfarben, aber auch bestimmte Tiefdruckfarben eigenen, können erhalten werden, indem man zunächst einfach oder mehrfach ungesättigte Fettsäuren, insbesondere C₈-C₄₀-Fettsäuren mit einem aliphatischen Alkohol mit mindestens zwei OH-Gruppen umsetzt, wobei mindestens eine OH-Gruppe nicht verestert werden darf. Beispielsweise können Linolsäure, Linolensäure oder Elaeostearinsäure umgesetzt werden. Der erhaltene Fettsäureester, der noch OH-Gruppen aufweist, wird dann mit den NCO-Gruppen umgesetzt. Weiterhin können die NCO-Gruppen aber auch direkt mit Vinyl- oder Allyl-Gruppen enthaltenden Alkoholen umgesetzt werden.

Es lassen sich auch geeignete Farbstoffe, beispielsweise in Analogie zu US 5,886,091 solche, die über einen Polyoxyalkylenspacer mit freier OH-Gruppe verfügen, direkt an das hyperverzweigte Polyurethan binden. Auf diese Art und Weise werden ganz besonders farbstarke Materialien erhalten.

Es können auch hyperverzweigte Polyurethane erzeugt werden, die verschiedenartige Funktionalitäten aufweisen. Dies kann beispielsweise durch Umsetzung mit einem Gemisch verschiedener Verbindungen erfolgen. Beispielsweise lassen sich solche Polyurethane erzeugen, indem man zwei Mol TDI mit einer Mischung aus einem Mol Trimethylolpropan und einem Mol Dimethylolpropionsäure reagieren läßt. Hierbei wird ein Produkt erhalten, das sowohl über Carbonsäuregruppen als auch über OH-Gruppen verfügt.

Weiterhin können solche Produkte auch dadurch erhalten werden, dass man mit einem ABₓ-Molekül polymerisiert, die Polymerisation bei dem gewünschten Umsetzungsgrad abbricht und anschliessend nur einen Teil der ursprünglich vorhandenen funktionellen Gruppen, beispielsweise nur einen Teil der OH- oder der NCO-Gruppen, umsetzt. Beispielsweise kann man so bei einem NCO-terminierten Polymer aus TDI und Glycerin die Hälfte der NCO-Gruppen mit Ethanolamin und die andere Hälfte der NCO-Gruppen mit Mercaptoessigsäure umsetzten.

Weiterhin kann man in ähnlicher Weise ein OH-terminiertes Polymerisat aus Isophorondiisocyanat und Diethanolamin nachträglich hydrophobieren, indem man zum Beispiel die Hälfte der OH-Gruppen mit Dodecylisocyanat oder mit Dodecansäure umsetzt.

Die Umfunktionalisierung eines hyperverzweigten Polyurethans oder die Anpassung der Polymereigenschaften an das Anwendungsproblem kann vorteilhaft unmittelbar im Anschluss an die Polymerisationsreaktion erfolgen, ohne dass das NCO-teminierte Polyurethan vorher isoliert wird. Die Funktionalisierung kann aber auch in einer separaten Reaktion erfolgen.

Die nach dem beschriebenen Verfahren erhältlichen hyperverzweigten Polyurethane werden zur Herstellung von Druckfarben oder von Drucklacken verwendet. Sie können als Additiv, wie beispielsweise als Dispergierhilfsmittel, Stabilisator oder Haftvermittler verwendet werden. Ganz besonders bevorzugt ist aber die Verwendung als Bindemittel für Druckfarben bzw. Drucklacke.

Polymerisationsgrad, Molmasse sowie Art und Anzahl funktioneller Gruppen können vom Fachmann je nach der vorgesehenen Anwendung gewählt werden.

Die erfindungsgemäß zur Herstellung von Druckfarben bzw. Drucklacke verwendeten hyperverzweigten Polyurethane weisen aber im Regelfalle im Mittel mindestens 4 funktionelle Gruppen auf. Die Zahl der funktionellen Gruppen ist prinzipiell nicht nach oben beschränkt. Allerdings weisen Produkte mit einer zu hohen Anzahl von funktionellen Gruppen häufig unerwünschte Eigenschaften auf, wie beispielsweise schlechte Löslichkeit oder eine sehr hohe Viskosität. Daher weisen die erfindungsgemäß verwendeten hyperverzweigten Polyurethane im Regelfalle nicht mehr als im Mittel 100 funktionelle Gruppen auf. Bevorzugt weisen die hyperverzweigten Polyurethane 4 bis 30 und besonders bevorzugt 4 bis 20 funktionelle Gruppen auf.

Die Molmassen der erfindungsgemäß verwendeten hyperverzweigten Polyurethane richten sich nach der jeweiligen Anwendung und werden vom Fachmann entsprechend ausgewählt. Bewährt haben sich Produkte mit einem Gewichtsmittel M_{w} von 500 bis 50 000 g/mol, bevorzugt 1000 bis 20 000 g/mol und besonders bevorzugt 1000 bis 10000 g/mol.

Die erfindungsgemäß verwendeten hyperverzweigten Polyurethane können als einziges Bindemittel für die Druckfarbe oder den Drucklack fungieren, es können aber auch Gemische mehrerer verschiedener hyperverzweigter Polyurethane oder auch hyperverzweigte Polyurethane im Gemisch mit anderen Bindemitteln eingesetzt werden.

Die hyperverzweigten Polyurethane können sowohl für lösemittelhaltige Druckfarben und -lacke eingesetzt werden, wie auch für strahlenhärtende, insbesondere für UV-härtende Druckfarben und -lacke, die im Regelfalle kein Lösemittel oder allenfalls geringe Mengen davon umfassen.

Die erfindungsgemäßen lösemittelhaltigen Druckfarben umfassen mindestens ein Lösemittel oder ein Gemisch verschiedener Lösemittel, mindestens ein Farbmittel, ein oder mehrere Bindemittel sowie optional weitere Zusatzstoffe.

Die erfindungsgemäßen lösemittelhaltigen Drucklacke umfassen mindestens ein Lösemittel oder ein Gemisch verschiedener Lösemittel, ein oder mehrere Bindemittel sowie optional weitere Zusatzstoffe.

Bei mindestens einem der Bindemittel handelt es sich um ein hyperverzweigtes Polyurethan. Es können auch mehrere verschiedene hyperverzweigte Polyurethane als Bindemittel eingesetzt werden. Die funktionellen Gruppen, insbesondere die terminalen funktionellen Gruppen können je nach der jeweiligen Anwendung gewählt werden. Insbesondere bewährt als funktionelle Gruppen haben sich -COOH, -CONH₂, -OH, -SH, - NH₂, -HNR, -NR₂, -SO₃H sowie Salze oder Derivate dieser Gruppen. OH-terminierte oder COOH-terminierte hyperverzweigte Polyurethane haben sich als ganz besonders vorteilhaft für Verpackungsdruckfarben zum Bedrucken von Polyolefin-, PET- oder Polyamid-Folien erwiesen. Besonders vorteilhaft für diesen Anwendungszweck ist der Einsatz von hyperverzweigten Polyurethanen, die sowohl OH- als auch COOH-Gruppen umfassen.

Die hyperverzweigten Polyurethane können im Gemisch mit anderen Bindemitteln eingesetzt werden, wobei vorausgesetzt wird, dass durch die Mischung treten keine unerwünschten Effekte, wie beispielsweise Ausfällungen eintreten. Beispiel für weitere Bindemittel umfassen Polyvinylbutyral, Nitrocellulose, Polyamide oder Polyacrylate oder Polyacrylat-Copolymere. Besonders vorteilhaft hat sich der Einsatz der hyperverzweigten Polyurethane im Gemisch mit Nitrocellulose erwiesen. Als Bindemittel werden üblicherweise 10 - 50 Gew. % bezüglich der Summe alle Bestandteile eingesetzt.

Lösemittel dienen zum Lösen der Bindemittel, sie dienen aber auch zur Einstellung wichtiger Eigenschaften wie der Viskosität oder der Einstellung der Trocknungsgeschwindigkeit. Die Art des Lösemittels richtet sich nach dem jeweiligen Verwendungszweck der Druckfarbe und als Lösemittel oder als Bestandteile von Lösemittelmischungen können prinzipiell in bekannter Art und Weise die für Druckfarben üblichen Lösemittel eingesetzt werden. Dies Auswahl ist lediglich dadurch beschränkt, dass das jeweils eingesetzte hyperverzweigte Polyurethan im Lösemittel eine ausreichende Löslichkeit aufweisen muss. Beispiele für derartige Lösemittel bzw. Komponenten von Lösemittelgemischen umfassen Kohlenwasserstoffe wie Toluol oder Xylol, hochsiedende Mineralöle oder pflanzliche Öle wie beispielsweise Sojaöl, Alkohole wie beispielsweise Ethanol, 1-Propanol, 2-Propanol, Ethylenglykol, Propylenglykol, Diethylenglykol, substituierte Alkohol wie beispielsweise Ethoxypropanol, Ester wie beispielsweise Ethylacetat, Isopropylacetat, n-Propyl oder n-Butylacetat. Es können selbstverständlich auch Gemische verschiedener Lösungsmittel eingesetzt werden. Als Lösungsmittel sind weiterhin Wasser oder ein überwiegend wäßriges Lösemittelgemisch prinzipiell geeignet. Je nach Art der Druckfarbe der des Drucklackes werden üblicherweise 20 bis 80 Gew.% Lösemittel bezüglich der Summe aller Bestandteile eingesetzt.

Als Farbmittel können die für Druckfarben üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin oder Isoindolin-Pigmente. Es können selbstverständlich auch Gemische verschedener Farbstoffe oder Farbmittel eingesetzt werden. Es können auch löslich organische Farbstoffe eingesetzt werden. Besonders vorteilhaft können lösliche Farbstoffe über einen geeigneten Spacer direkt an das hyperverzweigte Polyurethan gebunden werden, wodurch besonders farbstarke Druckfarben erhalten werden. Die Menge an Farbmittel beträgt üblicherweise 5 - 25 Gew. % bezüglich der Summe aller Bestandteile der Druckfarbe. Drucklacke enthalten naturgemäß kein Farbmittel.

Die erfindungsgemäßen Druckfarben bzw. -lacke können optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureeseter oder Ester der Adipinsäure. Bei oxidativ trocknenden Druckfarben können Trockenstoffe wie bestimmte Cobalt-, Mangan- oder Cer-Salze eingesetzt werden. Zum Dispergieren der Pigmente können Dispergierhilfsmittel eingesetzt werden. Bei den erfindungsgemäßen Druckfarben bzw. -lacken kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile und beträgt bevorzugt 0 - 10 Gew. %.

Die Herstellung der erfindungsgemäßen lösemittelhaltigen Druckfarben bzw. -lacke kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten hergestellt, die später mit weiteren Bestandteilen und weiterem Lösemittel zur fertigen Druckfarbe weiter verarbeitet wird.

Die erfindungsgemäßen strahlungshärtbaren Druckfarben umfassen mindestens ein Farbmittel, ein- oder mehrere Bindemittel sowie optional weitere Zusatzstoffe.

Die erfindungsgemäßen strahlungshärtbaren Drucklacke umfassen mindestens ein- oder mehrere Bindemittel sowie optional weitere Zusatzstoffe.

Im Regelfalle wird jeweils noch ein Reaktivverdünner eingesetzt.

Als Farbmittel können prinzipiell die üblichen, auch bei lösemittelhaltigen Farben bekannten Farbmittel eingesetzt werden. Üblicherweise werden 5 bis 25 Gew. % Farbmittel bezüglich der Summe aller Bestandteile eingesetzt. Für Drucklacke wird kein Farbmittel eingesetzt.

Zur Strahlungshärtung werden in bekannter Art und Weise energiereiche elektromagnetische Strahlung, insbesondere UV-Strahlung oder Elektronenstrahlen eingesetzt. Bei Härtung mittel Elektronenstrahlen ist ein zusätzlicher Initiator nicht erforderlich. Bei Härtung mittels UV-Strahlung ist zusätzlich ein Fotoinitiator oder ein Fotoinitiatorsystem als Komponente der Druckfarbe erforderlich. Die Härtung kann dabei prinzipiell radikalisch oder kationisch erfolgen.

Bei mindestens einem der Bindemittel handelt es sich um ein hyperverzweigtes Polyurethan, welches vernetzbare Gruppen aufweist. Insbesondere geeignet sind hyperverzweigte Polyurethane, die olefinische Gruppen oder Vinylether- bzw. Epoxidgruppen aufweisen, wobei diese Gruppen in der bereits geschilderten Art und Weise eingebracht werden. Das eingesetzte hyperverzweigte Polyurethan kann dabei ausschließlich derartige vernetzbare Gruppen aufweisen, es kann aber vorteilhaft auch vernetzbare Gruppen in Kombination mit anderen Gruppen aufweisen, vorausgesetzt, die eingesetzten Gruppen sind miteinander verträglich. Insbesondere geeignet ist die Kombination von COOH- und/oder OH-Gruppen mit olefinischen Gruppen. Die COOH- und/oder OH-Gruppen sorgen vorteilhaft für eine bessere Haftung im Vergleich zu Systemen ohne derartige Gruppen. Es können selbstverständlich auch zwei oder mehrere unterschiedliche hyperverzweigte Polyurethane oder Mischungen hyperverzweigter Polyurethanen mit anderen vernetzbaren Polymeren eingesetzt werden, vorausgesetzt, dass die Polymere jeweils miteinander verträglich sind. Üblicherweise werden 50-90 Gew. % an Bindemittel bezüglich der Summe aller Bestandteile eingesetzt.

Die strahlungshärtbare Druckfarbe bzw. der Drucklack umfasst weiterhin im Regelfalle mindestens einen Reaktivverdünner, insbesondere zum Einstellen der Viskosität der Druckfarbe. Als Reaktivverdünner können die üblichen, dem Fachmann prinzipiell bekannten Reaktivverdünner eingesetzt werden. Beispiele umfassen Butylacrylat, (2-Ethylhexyl)acrylat, sowie insbesondere mehrfunktionelle Acrylate wie 1,4-Butandioldi(meth)acrylat, 1,6-Hexandioldi(meth)acrylat oder Trimethylolpropantri(meth)acrylat. Weitere Beispiele umfassen Vinylether wie bspw. n-Butylvinylether, 1,4 Butandioldivinylether oder Diethylenglykoldivinylether oder Glycidylether wie bspw. Butylglycidylether oder Ethylenglykoldiglycidylether. Die Menge an Reaktivverdünner wird vom Fachmann ja nach der gewünschten Verwendung der erfindungsgemäßen Druckfarbe bestimmt. Üblicherweise sollte aber nicht mehr als 30 Gew. % an Reaktivverdünner in der Druckfarbe mit hyperverzweigtem Polyurethan eingesetzt werden.

Da die Menge an Reaktivverdünner zur Absenkung der Viskosität nicht beliebig erhöht werden kann, werden für Flüssigdruckfarben für den Verpackungsbereich Polymere mit eher niedriger Molmasse und nicht zu hoher Funktionalität eingesetzt. Bewährt haben sich für diese Anwendung hyperverzweigte Polymere mit mittleren Molmassen von unter 10 000 g/mol, besonders bewährt solche mit weniger als 5000 g/mol, ohne dass damit die Verwendung von Polymeren mit höheren Molmassen völlig ausgeschlossen werden soll. Bei pastösen Druckfarben können auch hyperverzweigte Polyurethane mit höherer Molmasse eingesetzt werden.

Als Fotoinitiatoren oder Fotoinitiatorsysteme können die üblichen Fotoinitiatoren für die radikalische oder die kationische Polymerisation eingesetzt werden. Beispiele umfassen Benzophenon und Benzophenonderivate, Bezoinetherderivate oder Diacylphoshinoxide für radikalisch härtende Druckfarben sowie bestimmte Sulfonium-Salze für kationisch härtende Druckfarben. Bei UV-härtenden Druckfarben werden üblicherweise werden 5 - 15 Gew. % Fotoinitiator bezüglich der Summe aller Bestandteile eingesetzt. Es können weiterhin übliche Additive eingesetzt werden.

Die Verwendung von Lösemitteln in UV-härtenden Systemen ist im allgemeinen weder erwünscht noch sinnvoll. Die erfindungsgemäße UV-härtbare Druckfarbe kann aber selbstverständlich in Spezialfällen zusätzlich ein Lösemittel umfassen.

Die erfindungsgemäßen Flüssigdruckfarben bzw. Drucklacke weisen gegenüber den entsprechenden Produkten mit konventionellen Bindemitteln eine deutlich verbesserte Haftung insbesondere auf nicht saugenden Bedruckstoffen wie Metallfolien oder Kunststofffolien auf, sowohl beim Konter- wie beim Frontaldruck. Der Zusatz von Haftvermittlern ist im Regelfall nicht erforderlich. Aufgrund dieser Eigenschaften eignen sie sich auch hervorragend zum Herstellen von Verbundverpackungen. Hierzu werden bspw. mit der erfindungsgemäßen Druckfarbe bedruckte Polyolefinfolien oder PET-Folien mit einer weiteren Kunststoff- oder Metallfolie zusammenlapiniert. Die erhaltenen Laminate weisen eine hervorragende Verbundfestigkeit, auch unter verschärfte Bedingungen, wie bspw. beim Erhitzen in Wasser oder beim Sterilisieren mit Wasserdampf, auf.

Weiterhin können die Druckfarben bzw. Drucklacke durch das geschilderte Herstellverfahren für die hyperverzweigten Polyurethane auf besonders einfache Art und Weise für verschiedene Anwendungen angepasst werden. So kann ein Basispolymer, beispielsweise mit Isocyanat oder OH-Funktionalitäten in größerem Maßstab synthetisiert werden. Die Anpassung an den jeweiligen Verwendungszweck kann dann in kleinerem Maßstab chargenweise über den Einbau funktioneller Gruppen verschiedener Art und Anzahl erfolgen. Aus wenigen ABₓ-Bausteinen verschiedenen Aufbaues und einigen Funktionalisierungsagentien ist schon durch paarweise Kombination eine große Anzahl verschiedener hyperverzweigter Polyurethane unterschiedlichster Eigenschaften zugänglich. Die Verwendung hyperverzweigter Polyurethane zur Herstellung stellt somit einen wesentlichen Beitrag zur Standardisierung und zur wirtschaftlichen Produktion von Druckfarben dar.

Die folgenden Beispiele sollen die Erfindung näher erläutern, ohne dass dadurch der Umfang der Erfindung eingeschränkt wird.

Für die Beispiele wurden die folgenden hyperverzweigten Polyurethane eingesetzt:
Polymer 1: Hyperverzweigtes Polyharnstoff-polyurethan aus Hexamethylendiisocyanat (HDI) und Diethanolamin (DEA), OH-terminiert
   672 g HDI, gelöst in 672 g Dimethylacetamid (DMAc), wurden unter Stickstoffbedeckung vorgelegt und auf 0°C abgekühlt. Bei dieser Temperatur wurde anschließend unter gutem Rühren eine Lösung aus 422 g Diethanolamin in 422 g DMAc innerhalb von 120 min zugegeben. Nach der Zugabe wurde die Reaktionslösung auf 50°C erwärmt und die Abnahme des NCO-Gehaltes titrimetrisch verfolgt. Bei Erreichen eines NCO-Gehaltes von 3,4 Gew.% wurde auf 20°C abgekühlt, nochmals 162 g Diethanolamin, gelöst in 162 g DMAc, zugesetzt, und 30 min nachgerührt. Die Reaktionslösung wurde anschließend am Rotationsverdampfer im Vakuum vom Lösemittel befreit. Das Reaktionsprodukt wies folgende Parameter auf:
   Mittlere Molmasse calc.: 1840 g/mol
   Mittlere Funktionalität: ca. 9 OH
Polymer 2: Hyperverzweigtes Polyharnstoff-polyurethan aus Hexamethylendiisocyanat (HDI) und Diisopropanolamin (DIIPA), OH-terminiert
   672 g HDI, gelöst in 672 g trockenem Tetrahydrofuran (THF), wurden unter Stickstoffbedeckung vorgelegt und auf 0°C abgekühlt. Bei dieser Temperatur wurde unter gutem Rühren eine Lösung aus 532 g DIIPA in 532 g THF innerhalb von 60 min zugegeben. Nach der Zugabe wurde die Reaktionsmischung auf 50°C erwärmt und die Abnahme des NCO-Gehaltes titrimetrisch verfolgt. Bei Erreichen eines NCO-Gehaltes von 2,2 Gew.% wurde auf 20°C abgekühlt, nochmals 180 g DIIPA, gelöst in 180 g THF, zugegeben und 30 min nachgerührt. Die Reaktionslösung wurde anschließend am Rotationsverdampfer im Vakuum vom Lösemittel befreit. Das Reaktionsprodukt wies folgende Parameter auf:
   Mittlere Molmasse calc.: 1037 g/mol
   Mittlere Funktionalität: ca. 6 OH
Polymer 3: Hyperverzweigtes Polyurethan aus Isophorondiisocyanat (IPDI), Trimethylolpropan (TMP) und ß-Alanin, COOH-terminiert
   1000 g IPDI wurden unter Stickstoffbedeckung vorgelegt und innerhalb 1 min 300g TMP, gelöst in 1300 g Ethylacetat, unter gutem Rühren zugegeben. Nach Zudosierung von 0,2 g Dibutylzinn-dilaurat wurde die Reaktionsmischung bei 50°C gerührt und die Abnahme des NCO-Gehaltes titrimetrisch verfolgt. Bei Erreichen eines NCO-Gehaltes von 4,2 Gew.% wurden 75g Tosylisocyanat als Stopper zugesetzt. Es wurd noch 1 h nachgerührt und anschliessend das Lösemittel am Rotationsverdampfer entfernt. Das Reaktionsprodukt wies eine mittlere Funktionalität bezüglich NCO von 7 auf.
   400g dieses NCO-Gruppen enthaltenden Reaktionsproduktes wurden in 400 g trockenem Aceton gelöst und auf 50°C erwärmt. Anschließend wurde eine Mischung bestehend aus 16 g NaOH in 160 g Wasser und 36 g ß-Alanin in 80 g Aceton zugegeben. Nach der Zugabe fiel ein Feststoff aus. Die Suspension wurde noch 30 min bei 50°C gerührt und anschließend das Lösemittelgemisch am Rotationsverdampfer im Vakuum entfernt. Der Rückstand wurde in 2000 ml Wasser gelöst und mit verdünnter Salzsäure neutralisiert. Das ausgefallene Endprodukt wurde abgesaugt und im Vakuum getrocknet.
   Mittlere Molmasse calc.: 3758 g/mol
   Mittlere Funktionalität: ca. 7 COOH

### Polymer 4: Hyperverzweigtes Polyurethan aus Isophorondiisocyanat (IPDI), Trimethylolpropan (TMP), HDI-Polymer und ß-Alanin, COOH-terminiert

500 g IPDI wurden unter Stickstoffbedeckung vorgelegt und innerhalb 1 min 150g TMP, gelöst in 650 g Ethylacetat, unter gutem Rühren zugegeben. Nach Zudosierung von 0,2 g Dibutylzinndilaurat wurde die Reaktionsmischung bei 50°C gerührt und die Abnahme des NCO-Gehaltes titrimetrisch verfolgt. Bei Erreichen eines NCO-Gehaltes von 5,8 Gew.% wurden 172g BASONAT HI 100 (Polyisocyanat auf HDI-Basis, BASF AG, NCO-Gehalt 22 Gew.%) als Stopper zugesetzt. Es wurde noch 3 h nachgerührt und anschließend das Lösemittel am Rotationsverdampfer entfernt. Das Reaktionsprodukt wies eine mittlere Funktionalität bezüglich NCO von ca. 13 auf.

1000g dieses NCO-Gruppen enthaltenden Reaktionsproduktes wurden in 1000 g trockenem Aceton gelöst. Anschließend wurde eine Mischung bestehend aus 47 g NaOH in 470 g Wasser und 105 g ß-Alanin in 235 g Aceton zugegeben, die Reaktionsmischung noch 30 min bei 40°C gerührt und anschließend das Lösemittelgemisch am Rotationsverdampfer im Vakuum entfernt. Der Rückstand wurde in Wasser gelöst und mit verdünnter Salzsäure neutralisiert, das ausgefallene Endprodukt abgesaugt und im Vakuum getrocknet.
Mittlere Molmasse calc.: 7248 g/mol
Mittlere Funktionalität: ca. 13 COOH

### Polymer 5: Hyperverzweigtes Polyurethan aus 2,4-Toluylendiisocyanat (TDI), Trimethylolpropan, 4,4'-Diphenylmethandiisocyanat (MDI) und Hydroxypivalinsäure, COOH-terminiert

400 g 2,4-TDI wurden unter Stickstoffbedeckung vorgelegt und unter gutem Rühren innerhalb 1 min 155 g TMP, gelöst in 555 g 2-Butanon, zugegeben. Nach Zudosierung von 0,2 g Dibutylzinndilaurat wurde die Reaktionsmischung bei 60°C gerührt und die Abnahme des NCO-Gehaltes titrimetrisch verfolgt. Bei Erreichen eines NCO-Gehaltes von 6,5 Gew.% wurden 94 g 4,4'-Diphenylmethandiisocyanat, gelöst in 94 g 2-Butanon, zugegeben und 3 h bei 60°C gerührt. Dann wurden 114 g Hydroxypivalinsäure, gelöst in 280 g 2-Butanon, und 0,1 g Dibutylzinndilaurat zugegeben, 8 h bei 60°C nachgerührt, und abschließend 100 g Methanol zugefügt. Das Lösemittelgemisch wurde am Rotationsverdampfer entfernt und das Produkt im Vakuum getrocknet.
Mittlere Molmasse calc.: 2723 g/mol
Mittlere Funktionalität: ca. 6 COOH

### Polymer 6: Hyperverzweigtes Polyurethan aus Hexamethylendiisocyanat (HDI), Dimethylolpropionsäure (DMPA) und Trimethylolpropan (TMP), COOH- und OH-terminiert

100 g HDI, gelöst in 250 g Dimethylacetamid (DMAc), wurden unter Stickstoffbedeckung vorgelegt. Anschliessend wurde unter gutem Rühren innerhalb von 1 min 79,7g Dimethylolpropionsäure, gelöst in 115g DMAc, zugegeben. Nach Zudosierung von 0,2 g Dibutylzinndilaurat wurde die Reaktionsmischung auf 70°C erwärmt und die Abnahme des NCO-Gehaltes titrimetrisch verfolgt. Bei Erreichen eines NCO-Gehaltes von 1,5 Gew.% wurden 13,5 g Trimethylolpropan, gelöst in 50 g DMAc zugesetzt und noch 1h bei 70°C nachgerührt. Anschließend wurde das Produkt am Rotationsverdampfer im Vakuum vom Lösemittel befreit.
Mittlere Molmasse calc.: 2793 g/mol
Mittlere Funktionalität: ca. 9 COOH und 3 OH

### Polymer 7: Hyperverzweigtes Polyurethan aus Isophorondiisocyanat (IPDI), Dimethylolpropionsäure (DMPA), Trimethylolpropan (TMP) und Polytetrahydrofuran, COOH- und OH-terminiert

222 g IPDI wurden unter Stickstoffbedeckung vorgelegt. Anschliessend wurde innerhalb 1 min die Mischung aus 67 g TMP und 67 g Dimethylolpropionsäure, gelöst in 356 g DMAc, unter gutem Rühren zugegeben. Nach Zudosierung von 0,4 g Dibutylzinndilaurat wurde die Reaktionsmischung auf 60°C erwärmt, bei dieser Temperatur gerührt und die Abnahme des NCO-Gehaltes titrimetrisch verfolgt. Bei Erreichen eines NCO-Gehaltes von 1,0 Gew.% wurden 32 g PolyTHF 250 (Polytetrahydrofuran, mittlere Molmasse 250 g/mol, BASF AG) zugesetzt und 3 h bei 60°C nachgerührt. Während dieser Zeit sank der NCO-Gehalt der Mischung auf 0%. Das Produkt wurde anschließend am Rotationsverdampfer bei 60°C im Vakuum von Lösungsmittel befreit.
Mittlere Molmasse calc.: 4408 g/mol
Mittlere Funktionalität: ca. 6 COOH und 8 OH

### Polymer 8: Hyperverzweigtes Polyurethan aus Hexamethylendiisocyanat (HDI), Dimethylolpropionsäure (DMPA) und Trimethylolpropan (TMP), COOH- und OH-terminiert

400 g HDI wurden bei Raumtemperatur unter Stickstoffbedeckung vorgelegt. Anschließend wurde unter gutem Rühren innerhalb von 2 min eine Mischung aus 160 g Dimethylolpropionsäure, 160g Trimethylolpropan und 720 g DMAc zugegeben. Nach Zudosierung von 0,5 g Dibutylzinndilaurat wurde die Reaktionsmischung auf 70°C erwärmt und die Abnahme des NCO-Gehaltes titrimetrisch verfolgt. Bei Erreichen eines NCO-Gehaltes von 0,9 Gew.% wurden 100 g Methanol zugesetzt und noch 30 min bei 70°C nachgerührt. Anschließend wird das Produkt am Rotationsverdampfer im Vakuum vom Lösemittel befreit.
Mittlere Molmasse calc.: 2451 g/mol
Mittlere Funktionalität: ca. 4 COOH und 5 OH

### Erfindungsgemäße Druckfarben mit hyperverzweigten Polyurethanen

Die Qualität der erfindungsgemäßen Druckfarben wurde anhand der Haftfestigkeit der Druckfarbe bestimmt.

Hierzu wurden zwei Testreihen durchgeführt:
Zum einen wurde die Haftfestigkeit des Druckfarbenfilms auf verschiedenen Bedruckstoffen bestimmt.
Zum anderen wurden die Druckfarben zum Herstellen von Folienverbunden (Laminaten) eingesetzt und die Verbundfestigkeit unter verschiedenen Bedingungen bestimmt. Folienverbunde werden beispielsweise zur Herstellung von Verbundverpackungen verwendet.

### Beispiele 1 - 16

Bestimmung von Haftfestigkeiten der hyperverzweigte Polymere enthaltenden Druckfarbensysteme auf verschiedenen Bedruckstoffen im Vergleich zu einem Standard-System

### Messmethode Tesafestigkeit

Das Prüfverfahren "Tesafestigkeit" dient zur Bestimmung der Haftung eines Druckfarbenfilms auf dem Bedruckstoff.

### Herstellen der Proben

Die auf Druckviskosität verdünnte Farbe wird auf dem vorgeschriebenen Bedruckstoff angedruckt oder mit einem 6 µm-Rakel aufgezogen.

### Durchführung der Prüfung

Ein Tesabandstreifen (Klebeband mit 19 mm Breite (Artikel BDF 4104, Beiersdorf AG) wird auf den Druckfarbenfilm aufgeklebt, gleichmäßig angedrückt und nach 10 Sekunden wieder abgerissen. Dieser Vorgang wird auf derselben Stelle des Prüflings jeweils mit einem neuen Tesabandstreifen 4 mal wiederholt. Jeder Tesastreifen wird nacheinander auf ein weißes Papier, bei weißen Farben auf Schwarzpapier aufgeklebt. Die Prüfung erfolgt sofort nach Applikation der Farbe.

### Auswertung

Es erfolgt eine visuelle Prüfung der Oberfläche des Prüflings auf Beschädigung. Die Benotung erfolgt von 1 (sehr schlecht) bis 5 (sehr gut).

Für die Beispiele wurde folgende Standard-Rezeptur (Gew. Teile) gewählt:
- 70,0: Pigment Präparation (BASF Drucksysteme)
- 8,0: Nitrocellulose (Wolf)
- 1,0: Oleamid (Croda)
- 0,5: PE-Wachse (BASF AG)
- 2,0: Dibutylphthalat (Brenntag)
- 10,5: Ethanol
- 6,0*: Polyurethan Co-Binder (gemäß Tabellen 1 und 2)
- 2,0**: Titanchelat (Du Pont)
- * =: Das Polyurethan wurde als 75%ige Lösung in Ethanol zubereitet
- ** =: Titanchelat wurde in der zweiten Versuchsreihe (Tabelle 2) weggelassen.

**Tabelle 1: Standard-PU-Binder im Vergleich zu hyperverzweigten Polyurethanen**

| Beispiel | Co-Binder | Bedruckstoff (Folie) | | |
|---|---|---|---|---|
| | | PP | PET Melinex 800 | PA Walomid XXL |
| 1 (Vergleich) | Standard-Polyurethan (PUR 7313, BASF) | 5 | 3 | 1 |
| 2 | Polymer 1 | 4 | 5 | 4,5 |
| 3 | Polymer 2 | 5 | 5 | 4,5 |
| 4 | Polymer 3 | 3,5 | 4,5 | 3,5 |
| 5 | Polymer 5 | 5 | 3 | 4 |
| 6 | Polymer 6 | 5 | 5 | 5 |
| 7 | Polymer 7 | 5 | 4 | 5 |
| 8 | Polymer 8 | 5 | 5 | 3 |

**Tabelle 2: Systeme ohne Titanchelat als Haftvermittler**

| Beispiel | Co-Binder | Bedruckstoff (Folie) | | |
|---|---|---|---|---|
| | | PP | PET Melinex 800 | PA Walomid XXL |
| 9 (Vergleich) | Standard-Polyurethan (PUR 7313, BASF) | 1 | 1 | 1 |
| 10 | Polymer 1 | 4 | 4,5 | 4,5 |
| 11 | Polymer 3 | 4 | 4,5 | 4 |
| 12 | Polymer 4 | 5 | 4,5 | 4,5 |
| 13 | Polymer 5 | 5 | 5 | 3 |
| 14 | Polymer 6 | 5 | 5 | 5 |
| 15 | Polymer 7 | 5 | 4 | 5 |
| 16 | Polymer 8 | 5 | 5 | 5 |

| | | | | |
|---|---|---|---|---|
| PP = Polypropylen PET = Polyethylenterephthalat PA = Polyamid | | | | |

Die Beispiele zeigen, dass die Haftung der erfindungsgemäßen Druckfarbe auf verschiedenen Substraten erheblich besser ist, als bei Verwendung von konventionellen Polyurethanen als Bindemittel. Bei der Verwendung konventioneller Polyurethane muss ein Haftvermittler zwingend zugegeben werden, um zumindest in einigen Fällen brauchbare Ergebnisse erzielen zu können. Auf PA ist die Haftung trotz Haftvermittler unbefriedigend. Durch den Ersatz des konventionellen Polyurethans durch hyperverzweigte Polyurethane kann die Haftfestigkeit gesteigert werden. Besonders vorteilhaft kann auf Haftvermittler verzichtet werden. Mit hyperverzweigten Polyurethanen wird dennoch in allen Fällen eine hervorragende Haftung erzielt.

### Beispiele 17 und 18:

### Verwendung der erfindungsgemäßen Druckfarbe zur Herstellung von Laminaten

Zur Herstellung von Verbundverpackungen werden bedruckte Polymerfolien, bspw. PE oder PP-Folien, mit anderen Materialien, wie bspw. Metallfolien, durch Laminierung verbunden. Wichtige Anwendungseigenschaften derartiger Laminate für den Einsatz als Verbundverpackung sind neben der Festigkeit des Verbundes bei normaler Lagerung auch die Festigkeit der Verbundes unter verschärften Bedingungen, wie beispielsweise beim Erhitzen oder Sterilisieren.

### 1) Verbundfestigkeit von Laminaten:

Unter Verbundfestigkeit versteht man die Bestimmung der Verbundhaftung zwischen zwei durch Kaschierung oder Extrusion verbundenen Filmen oder Metallfolien (Laminaten).

Mess- und Prüfgeräte:
Zugfestigkeitsprüfgerät Fa. Zwick
Stanzwerkzeug (Breite: 15mm)
Herstellung der Proben:

Von dem zu testenden Verbundmaterial müssen mindestens je 2 Streifen (Breite: 15mm) längs und quer zur Folienbahn zugeschnitten werden. Zur Erleichterung der Trennung (Delaminierung) des Verbundes können die Enden der ausgestanzten Streifen in ein geeignetes Lösungsmittel (z.B. 2-Butanon) getaucht werden, bis sich die Materialien voneinander lösen. Danach wird das Muster wieder sorgfältig getrocknet.

### Durchführung der Prüfung:

Die delaminierten Enden der Prüflinge werden in den Zugfestigkeitsprüfer eingespannt. Der weniger dehnfähige Film sollte in die obere Klemme eingelegt werden. Beim Anlauf der Maschine sollte das Ende des Musters im rechten Winkel zur Zugrichtung gehalten werden, wodurch ein konstanter Zug gewährleistet wird. Die Abzugsgeschwindigkeit beträgt 100 mm/min., der Abzugswinkel der getrennten Filme zum nichtgetrennten Komplex 90°.

### Auswertung:

Abgelesen wird der Verbundwert als Mittelwert, Angabe in N / 15mm.

### 2) Kochfestigkeit von Laminaten

Dieses Prüfverfahren dient zur Beurteilung der Beständigkeit eines Druckfarbenfilms gegen kochendes Wasser.

### Geräte:

Heizplatte mit Wasserbad.

### Durchführung der Prüfung:

Der Verbund wird 1 Stunde in einem Becherglas mit kochendem Wasser untergetaucht gehalten. Der Prüfling wird anschließend aus dem Wasserbad genommen und auf Raumtemperatur abkühlt.

### Auswertung:

Beurteilt wird die Verbundfestigkeit der Laminate.

### 3) Sterilisierfestigkeit von Laminaten

Dieses Prüfverfahren dient zur Beurteilung der Beständigkeit eines Druckfarbenfilms oder eines Laminat-Verbundes gegen Wasserdampf.

### Geräte:

### Hochdruckdampfsterilisator

### Durchführung der Prüfung:

Der Verbund wird in ein Becherglas gestellt, dessen Boden etwa mit 1cm destilliertem Wasser bedeckt ist. Das Becherglas wird dann in den Dampfdrucksterilisator gestellt und 30 min. getempert.

Temperatur des Dampfdrucksterilisators: 121°C; Druck: 1,3 bar. Der Prüfling wird anschließend aus dem Wasser genommen und auf Raumtemperatur abgekühlt.

### Auswertung:

Beurteilt wird die Verbundfestigkeit der Laminate.

### Beispiele 17 und 18, Herstellung der Proben:

Die auf Druckviskosität verdünnte Farbe wird auf dem vorgeschriebenen Bedruckstoff angedruckt oder mit einem 6 µm-Rakel aufgezogen. Parallel dazu wird die Kaschierfolie (Beispiel 19 Aluminium, Beispiel 20 PE) mit einer Kleber-Härter-Mischung (Kleber: Liofol UR7745, Härter: UR6075 (Fa. Henkel), Mischungsverhältnis 6:1) so beschichtet, dass eine Filmdicke von etwa 6 µm (entspricht etwa 2,5 g / m²) resultiert. Beide Folien werden anschließend so verpresst, dass die Druckfarbe und der Kleber in Kontakt kommen. Nach dem Verpressen werden die Verbundfolien 5 Tage bei 60°C gelagert.

Es wurden folgende Rezepturen (Gew. Teile) für die Beispiele gewählt:

### Standard-Rezeptur (Vergleich):

- 70,0: Pigment Präparation (BASF Drucksysteme)
- 8,0: Nitrocellulose (Wolf)
- 1,0: Oleamid (Croda)
- 0,5: PE-Wachse (BASF AG)
- 2,0: Dibutylphthalat (Brenntag)
- 10,5: Ethanol
- 6,0*: konventionelles Polyurethan PUR 7317 (BASF)
- 2,0: Titanchelat (Du Pont)

### Rezeptur 1 (erfindungsgemäß):

- 70,0: Pigment Präparation (BASF Drucksysteme)
- 8,0: Nitrocellulose (Wolf)
- 1,0: Oleamid (Croda)
- 0,5: PE-Wachse (BASF AG)
- 2,0: Dibutylphthalat (Brenntag)
- 10,5: Ethanol
- 6,0§): Hyperverzweigtes Polyurethan, Polymer 1

### Rezeptur 2 (erfindungsgemäß):

- 70,0: Pigment Präparation (BASF Drucksysteme)
- 8,0: Nitrocellulose (Wolf)
- 1,0: Oleamid (Croda)
- 0,5: PE-Wachse (BASF AG)
- 2,0: Dibutylphthalat (Brenntag)
- 10,5: Ethanol
- 6,0§): Hyperverzweigtes Polyurethan, Polymer 1
- 2,0: Titanchelat (Dupont)
- §) =: Der Co-Binder wurde als 75%ige Lösung in Ethanol zubereitet

### Beispiel 17: Verbund aus PET und Aluminium

Bedruckstoff: PET (Melinex 800)
Kaschierfolie: Aluminium

| Verbundfestigkeit | Verbundwerte in N/15mm: |
|---|---|
| | Farbe: Cyan |
| Standard-Rezeptur: | 2,40 |
| Rezeptur 1 | 4,44 |
| Rezeptur 2 | 4,97 |
| | |
| Kochfestigkeit: | |
| | |
| Standard-Rezeptur: | kein Verbund |
| Rezeptur 1 | 2,49 |
| Rezeptur 2 | 3,35 |
| | |
| Sterilisierfestigkeit: | |
| | |
| Standard-Rezeptur: | kein Verbund |
| Rezeptur 1 | 1,36 |
| Rezeptur 2 | 3,80 |

### Beispiel 18: Verbund aus PP und Polyethylen

Bedruckstoff: PP (MB 400)
Kaschierfolie: Polyethylen

| Verbundfestigkeit: | Verbundwerte in N/15mm: |
|---|---|
| | Farbe: Cyan |
| Standard-Rezeptur | 2,5 |
| Rezeptur 1 | 3,5 |
| Rezeptur 2 | 4,2 |

Die Beispiele zeigen, dass mit den erfindungsgemäßen, hyperverzweigte Polyurethane enthaltenden Druckfarben hervorragende Haftung, auch unter verschärften Bedingungen erhalten wird.

## Patentansprüche

1. Verwendung von hyperverzweigten Polyurethanen zur Herstellung von Druckfarben oder von Drucklacken.

2. Verwendung von hyperverzweigten Polyurethanen gemäß Anspruch 1, **dadurch gekennzeichnet, dass** die hyperverzweigten Polyurethane funktionelle Gruppen aufweisen, die gleichartig oder verschiedenartig sein können und aus der Gruppe von -COOH, -COOR, -CONHR, -CONH₂, -OH, -SH, -NH₂, -NHR, -NR₂, -SO₃H, -SO₃R, -NHCOOR, -NHCONH₂, -NHCONHR, -CN oder Salzen der genannten Gruppen ausgewählt werden wobei die Reste R geradkettige oder verzweigte Alkylreste oder Arylreste sind.

3. Verwendung von hyperverzweigten Polyurethanen gemäß Anspruch 2, **dadurch gekennzeichnet, dass** es sich bei den funktionellen Gruppen um -COOH, -CONH₂, -OH, -SH, -NH₂, -NHR, -NR₂, -SO₃H oder Salze der genannten Gruppen handel wobei die Reste R geradkettige oder verzweigte Alkylreste oder Arylreste sind.

4. Verwendung von hyperverzweigten Polyurethanen gemäß einem der Ansprüche 1 bis 3, **dadurch gekennzeichnet, dass** die hyperverzweigten Polyurethane im Mittel mindestens 4 funktionelle Gruppen aufweisen.

5. Verwendung von hyperverzweigten Polyurethanen gemäß Anspruch 4, **dadurch gekennzeichnet, dass** die hyperverzweigten Polyurethane 4 - 30 funktionelle Gruppen aufweisen.

6. Verwendung von hyperverzweigten Polyurethanen gemäß einem der Ansprüche 1 bis 5, **dadurch gekennzeichnet, dass** die hyperverzweigten Polyurethane zusätzlich fotochemisch vernetzbare Gruppen aufweisen.

7. Druckfarbe, mindestens umfassend ein Lösemittel oder ein Gemisch mehrerer, Lösemittel, mindestens ein Farbmittel, ein oder mehrere Bindemittel sowie optional weitere Zusatzstoffe, **dadurch gekennzeichnet, dass** es sich bei mindestens einem der Bindemittel um ein hyperverzweigtes Polyurethan handelt.

8. Druckfarbe gemäß Anspruch 7, **dadurch gekennzeichnet, dass** es sich bei dem Lösemittel oder Lösemittelgemisch um organische Lösemittel handelt.

9. Druckfarbe gemäß Anspruch 7, **dadurch gekennzeichnet, dass** es sich bei dem Lösemittel um Wasser oder um ein überwiegend wässriges Lösemittelgemisch handelt.

10. Strahlungshärtbare Druckfarbe mindestens umfassend mindestens ein Farbmittel, ein- oder mehrere Bindemittel sowie optional weitere Zusatzstoffe, **dadurch gekennzeichnet, dass** es sich bei mindestens einem der Bindemittel um ein hyperverzweigtes Polyurethan handelt, welches fotochemisch vernetzbare Gruppen aufweist.

11. Strahlungshärtbare Druckfarbe gemäß Anspruch 10, **dadurch gekennzeichnet, dass** die Druckfarbe weiterhin mindestens einen Fotoinitiator oder ein Fotoinitiatorsystem umfasst.

12. Strahlungshärtbare Druckfarbe nach Anspruch 11 oder 12, **dadurch gekennzeichnet, dass** die Druckfarbe zusätzlich mindestens einen Reaktivverdünner umfasst.

13. Drucklack, mindestens umfassend ein Lösemittel oder ein Gemisch mehrerer, Lösemittel, ein oder mehrere Bindemittel sowie optional weitere Zusatzstoffe, **dadurch gekennzeichnet, dass** es sich bei mindestens einem der Bindemittel um ein hyperverzweigtes Polyurethan handelt.

14. Strahlungshärtbarer Drucklack mindestens umfassend ein- oder mehrere Bindemittel sowie optional weitere Zusatzstoffe, **dadurch gekennzeichnet, dass** es sich bei mindestens einem der Bindemittel um ein hyperverzweigtes Polyurethan handelt, welches fotochemisch vernetzbare Gruppen aufweist.

15. Verwendung von Drucklacken gemäß Anspruch 13 oder 14 zum Grundieren von Bedruckstoffen oder zur Lackierung von bedruckten Bedruckstoffen.

## Claims

1. The use of hyperbranched polyurethanes for the preparation of printing inks or of printing lacquers.

2. The use of hyperbranched polyurethanes according to claim 1, wherein hyperbranched polyurethanes have functional groups which may be identical or different and are selected from the group consisting of -COOH, -COOR, -CONHR, -CONH₂, -OH, -SH, -NH₂, -NHR, -NR₂, -SO₃H, - SO₃R, -NHCOOR, -NHCONH₂, -NHCONHR, -CN and salts of said groups, where the radicals R are straight-chain or branched alkyl radicals or aryl radicals.

3. The use of hyperbranched polyurethanes according to claim 2, wherein the functional groups are -COOH, -CONH2, -OH, -SH, -NH₂, -NHR, -NR₂, -SO₃H or salts of said groups, where the radicals R are straight-chain or branched alkyl radicals or aryl radicals.

4. The use of hyperbranched polyurethanes according to any of claims 1 to 3, wherein the hyperbranched polyurethanes have an average of at least 4 functional groups.

5. The use of hyperbranched polyurethanes according to claim 4, wherein the hyperbranched polyurethanes have 4 - 30 functional groups.

6. The use of hyperbranched polyurethanes according to any of claims 1 to 5, wherein the hyperbranched polyurethanes additionally have photochemically crosslinkable groups.

7. A printing ink, at least comprising a solvent or a mixture of a plurality of solvents, at least one colorant, one or more binders and optionally further additives, wherein at least one of the binders is a hyperbranched polyurethane.

8. A printing ink according to claim 7, wherein the solvent or solvent mixture is an organic solvent or comprises organic solvents.

9. A printing ink according to claim 7, wherein the solvent is water or predominantly aqueous solvent mixture.

10. A radiation-curable printing ink, at least comprising at least one colorant, one or more binders and optionally further additives, wherein at least one of the binders is a hyperbranched polyurethane which has photochemically crosslinkable groups.

11. A radiation-curable printing ink according to claim 10, wherein the printing ink furthermore comprises at least one photoinitiator or a photoinitiator system.

12. A radiation-curable printing ink according to claim 11 or 12, wherein the printing ink additionally comprises at least one reactive diluent.

13. A printing lacquer, at least comprising a solvent or a mixture of a plurality of solvents, one or more binders and optionally further additives, wherein at least one of the binders is a hyperbranched polyurethane.

14. A radiation-curable printing lacquer, at least comprising one or more binders and optionally further additives, wherein at least one of the binders is a hyperbranched polyurethane which has photochemically crosslinkable groups.

15. The use of printing lacquers according to claim 13 or 14 for priming print media or for coating printed print media.

## Revendications

1. Utilisation de polyuréthanes hyperramifiés pour la production d'encres d'imprimerie ou de laques d'imprimerie.

2. Utilisation de polyuréthanes hyperramifiés selon la revendication 1, **caractérisée en ce que** les polyuréthanes hyperramifiés présentent des groupes fonctionnels, qui peuvent être identiques ou différents et qui sont choisis dans le groupe formé par -COOH, -COOR, -CONHR, -CONH₂, -OH, -SH, -NH₂, -NHR, -NR₂, -SO₃H, -SO₃R, -NHCOOR, -NHCONH₂, -NHCONHR, -CN ou les sels des groupes mentionnés, les radicaux R étant des radicaux alkyle linéaires ou ramifiés ou des radicaux aryle.

3. Utilisation de polyuréthanes hyperramifiés selon la revendication 2, **caractérisée en ce qu'**il s'agit, pour les groupes fonctionnels, de -COOH, -CONH₂, -OH, -SH, -NH₂, -NHR, -NR₂, -SO₃H ou des sels des groupes mentionnés, les radicaux R étant des radicaux alkyle linéaires ou ramifiés ou des radicaux aryle.

4. Utilisation de polyuréthanes hyperramifiés selon l'une quelconque des revendications 1 à 3, **caractérisée en ce que** les polyuréthanes hyperramifiés présentent en moyenne au moins 4 groupes fonctionnels.

5. Utilisation de polyuréthanes hyperramifiés selon la revendication 4, **caractérisée en ce que** les polyuréthanes hyperramifiés présentent 4-30 groupes fonctionnels.

6. Utilisation de polyuréthanes hyperramifiés selon l'une quelconque des revendications 1 à 5, **caractérisée en ce que** les polyuréthanes hyperramifiés présentent en outre des groupes réticulables par voie photochimique.

7. Encre d'imprimerie, comprenant au moins un solvant ou un mélange de plusieurs solvants, au moins un colorant, un ou plusieurs liants ainsi qu'éventuellement d'autres additifs, **caractérisée en ce qu'**il s'agit, pour au moins un des liants, d'un polyuréthane hyperramifié.

8. Encre d'imprimerie selon la revendication 7, **caractérisée en ce qu'**il s'agit, pour le solvant ou le mélange de solvants, de solvants organiques.

9. Encre d'imprimerie selon la revendication 7, **caractérisée en ce qu'**il s'agit, pour le solvant, d'eau ou d'un mélange de solvants principalement aqueux.

10. Encre d'imprimerie durcissable sous l'effet d'un rayonnement, comprenant au moins un colorant, un ou plusieurs liants ainsi qu'éventuellement d'autres additifs, **caractérisée en ce qu'**il s'agit, pour au moins un des liants, d'un polyuréthane hyperramifié qui présente des groupes réticulables par voie photochimique.

11. Encre d'imprimerie durcissable sous l'effet d'un rayonnement selon la revendication 10, **caractérisée en ce que** l'encre d'imprimerie comprend en outre au moins un photo-initiateur ou un système de photo-initiateur.

12. Encre d'imprimerie durcissable sous l'effet d'un rayonnement selon la revendication 11 ou 12, **caractérisée en ce que** l'encre d'imprimerie contient en outre au moins un diluant réactif.

13. Laque d'imprimerie, comprenant au moins un solvant ou un mélange de plusieurs solvants, un ou plusieurs liants ainsi qu'éventuellement d'autres additifs, **caractérisée en ce qu'**il s'agit, pour au moins un des liants, d'un polyuréthane hyperramifié.

14. Laque d'imprimerie durcissable sous l'effet d'un rayonnement, comprenant au moins un ou plusieurs liants ainsi qu'éventuellement d'autres additifs, **caractérisée en ce qu'**il s'agit, pour au moins un des liants, d'un polyuréthane hyperramifié qui présente des groupes réticulables par voie photochimique.

15. Utilisation de laques imprimerie selon la revendication 13 ou 14 pour l'apprêt de supports d'impression ou pour le laquage de supports d'impression imprimés.
